Europäisches Patentamt

European Patent Office

Office européen des brevets

(11) Publication number: 0 220 933
A1

# EUROPEAN PATENT APPLICATION

(21) Application number: 86308210.3

(22) Date of filing: 22.10.86

(51) Int. Cl.⁴: B 01 J 35/02
B 01 J 29/06

(30) Priority: 25.10.85 US 791285

(43) Date of publication of application:
06.05.87 Bulletin 87/19

(84) Designated Contracting States:
AT BE DE FR GB IT NL SE

(71) Applicant: MOBIL OIL CORPORATION
150 East 42nd Street
New York New York 10017 (US)

(72) Inventor: Huang, Yun-Yang
98 William Feather Drive
Voorhees New Jersey 08043 (US)

(74) Representative: Cooper, John Anthony et al
Mobil Court 3 Clements Inn
London WC2A 2EB (GB)

(54) Quadrulobe-type shaped catalytic extrudates.

(57) The present invention relates to shaped particles which are employed to form catalytic extrudates which may be employed in catalytically promoted processed, including hydrocarbon processing operations. The quadrulobe shape of the present invention have better overall physical properties regarding diffusion limitation, pressure drop and crushing strength. The shaped particles facilitate hydrocarbon processing operations, especially those utilizing packed catalyst beds.

EP 0 220 933 A1

**Description**

## QUADRULOBE-TYPE SHAPED CATALYIC EXTRUDATES

The present invention relates to formed particles having particular shapes which particles may be employed in a wide variety of catalytically activated and/or enhanced processes. including, for example. alkylation or dealkylation of aryl compounds including benzene; the isomerization of various materials, including, for example, xylene; and the conversion of substances. such as coal-derived compounds or methanol or other hydrocarbons into materials, such as olefins, or fuels or lubricants and the like. The particular configuration of the formed particle has been developed to improve the catalytic activity and physical properties, such as pressure drop, crushing strength and abrasion resistance of the particle, as well as the selectivity of the catalyst for the particularly desired product. The novel shaped formed particles of the present invention may also be employed for end use applications, including guard bed service and/or as catalyst supports.

It has been generally known that by selection of varied geometrical cross-sectional configurations, formed catalytic particles may be designed to offer shorter diffusion paths for reactants and/or products which may be desirable in, for example, a diffusion controlled reaction. Additionally, catalytic particle configuration has been employed in the past to reduce the pressure drop encountered across a packed catalyst bed, and/or to reduce catalyst loss due to breakage, abrasion or crushing during handling, sizing or when severe process conditions are encountered.

The prior art has suggested various shapes, including rods, cylinders, spheres, spools, etc., of various sizes, dimensions and proportions. Various forms of catalyst particles have been illustrated in U. S. Patent No. 2.408,164. Methods of preparing such shapes include pressing, extruding or otherwise forcing a granular or powdered catalyst material into various shapes under certain conditions in an endeavor to ensure the material retains the resulting shape, both during reaction as well as regeneration. The main purposes of this procedure are: (1) to permit easy handling; (2) to increase the contact surface of a given amount of catalyst; and (3) to improve the passage of liquid or vapor through the catalyst while increasing the length of time between regenerations. However, problems associated with prior art catalyst shapes is that they lack one or more of the desired properties, including adequate strength, rigidity, crushing resistance. resistance to abrasion upon handling and resistance to thermal shock upon being used in conversion and/or during regeneration.

In hydrocarbon conversions at elevated temperatures over solid catalysts, the deposition of carbon on the surface of the catalyst is always present. This carbonaceous coating soon blankets the surface of the catalyst, necessitating regeneration of the catalyst of removal of the coating before the catalyst can continue to promote the reaction.

Another problem faced by the operator of a catalytic unit is that of placing the catalyst in the reaction chamber in such a manner that all portions of the catalyst are brought into contact with the reaction materials in the same degree. If packed irregularly, the catalyst in the bed will present uneven distribution of liquid or vapor charge in the bed. Prior art attempts to develop a catalyst shape satisfy some of the requirements previously discussed, and the art continues to seek improved catalyst shapes to satisfy these requirements.

Examples of the art's continued efforts can be found in U. S. Patent Nos. 3,674,680 and 3,764,565. Attempts at reducing the size of the shaped catalyst in order to increase the surface-to-volume ratio of the catalyst particles resulted in a bed of particles that would "pack" too closely, resulting in excessively high pressure drops across the catalyst bed. In attempts to make the catalyst more efficient, additional shapes, such as the ring, cloverleaf. cross and C-shaped catalyst forms, were developed. Efforts continued by those skilled in the art to develop improved shapes to satisfy the requirements of the industry.

Further endeavors utilized "lobe" shapes, such as evidenced in U. S. Patent Nos. 3,857,780; 3,966,644; 3,990,964, later reissued as Re. 30,155; and 4,028,227. The lobe shapes of these patents include single lobes of elliptical shape, double lobes attached to each other or through a thin web to each other, and also include disclosure of three- and four-lobed shapes. The catalyst shapes of these patents were geometric solids, and thus have an internal pore structure at relatively low surface-to-volume ratios. Continuing efforts to increase the surface-to-volume ratio led to the development of applicant's U. S. Patent No. 4,441,990. The catalyst particle therein was a non-cylindrical shape provided with a centrally located aperture or throughhole, such that the surface-to-volume ratio was increased while providing adequate resistance to crushing due to the distribution of forces through the particle. Although solving many of the problems encountered by the prior art, the star- or cross-shaped configuration permitted the lobes of one catalyst to interdigitate with the channels between adjacent lobes of an adjacent catalyst, thus increasing packing density of a catalyst bed and reducing the number of channels through which the charge material contacted the catalyst.

Attempts had been made by the prior art to prevent protrusions of one catalyst from entering the channels between adjacent protrusions of an adjacent catalyst particle, such as disclosed in U. S. Patent No. 4,328,130. Such an attempt was based on using a catalyst particle having the shape of a cylinder and in which the protrusions partially defined a portion of the circumference of the cylinder, with the channels being cut radially inwards toward the center of the particle. This shape provided protrusions having sharp edges, prone to breakage, as well as defining protrusions wherein points within the protrusion lie relatively far from any surface of the particle which contacts the charge. Accordingly, these attempts in providing different catalyst shapes were not effective in overcoming the problems experienced by those skilled in the art.

Other attempts at solving problems in this art are well documented in prior art patents, such as U. S. Patent Nos. 4,133,777; 4,391,740; 4,394,303; 4,330,397; 4,428,862; 4,447,314; 4,460,707; 4,489,173; and 4,495,307.

In accordance with the present invention, particles are provided having a "quadrulobe" cross-sectional shape, having an asymmetric configuration, having high crushing strength, small pressure drop and a high surface-to-volume ratio.

In a first embodiment, the invention provides a shaped particle comprising four protrusions each extending from and attached to a central portion, the particle having an asymmetric cross-sectional shape, the protrusions having an external periphery with four points of contact when circumscribed by a circle, each pair of protrusions being separated by a channel which is narrower than the protrusions to prevent the entry thereinto of the protrusions from an adjacent particle.

In a second embodiment, the invention provides a process for the conversion of an organic charge which comprises contacting the same under conversion conditions with a catalyst, comprising a crystalline aluminosilicate characterized by having a formed particle configuration as described above.

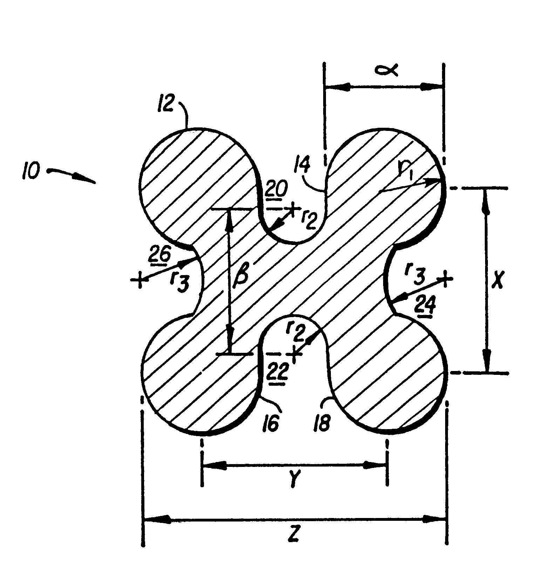

The figure is a graphic representation of a cross-section of a catalyst particle in accordance with the present invention.

The catalyst forms in accordance with the present invention exhibit the following advantages:

(1) greater particle surface area per unit volume and shorter diffusion path for reactants and/or products;

(2) reduced pressure drop across a packed catalyst bed; and

(3) reduced catalyst loss to breakage, crushing and handling, sizing, regeneration or under other severe process conditions.

As hereinabove discussed, although other prior art catalyst shapes may, in some cases, exhibit advantages in one or two of these categories, such advantages are attained at the expense of other requirements of the catalyst. The catalyst particle shapes in accordance with the present invention, by virtue of the increased number of points of contact with one another, and the asymmetric configuration of the particle, radically alter the load distribution of the particle. Consequently, the present catalytic extrudates have been found to possess the desired properties in each of the categories desired by those having ordinary skill in the art.

It is known that certain reactions which require solid catalysts in the form of particles are limited by the rate of diffusion of the reactants into the particle and by the rate of the diffusion of the products formed by the reactants out of the particle. Accordingly, there is an advantage in making the particles so that they exhibit a high surface area-to-volume ratio. This may be achieved by reducing the particle size; however, there is a practical lower limit to the size of the particle since, as the particle size decreases, the pressure drop required to pump the reactants through a catalyst bed increases. Also, prior art shapes are difficult to manufacture in diameters less than 0.8 mm (1/32"), as well as their physical strength characteristics being so poor as to be commercially unacceptable.

According to the present invention, a design of an asymmetric quadrulobe-shaped particle is disclosed, which particle may be formed by extrusion or similar molding technique, although extrusion is preferred. The cross-section of the particle 10, as shown in the figure, illustrates protrusions 12, 14, 16, 18 in the form of four bulbous configurations defined in part by a radius $r_1$. Although for purposes of illustration the bulbous protrusions are each defined by the movement of a radius $r_1$ about an axis at each end of an imaginary rectangle having sides of dimension X and Y, wherein X and Y may be equal or different, it is to be understood that either the axis or radius may be the same or different for each of the protrusions. Between adjacent protrusions exist channels 20, 22, 24, 26, at least some of which are of a size such that protrusions 12, 14, 16, 18 of adjacent catalysts of similar size and configuration will not fit therein. These channels may be rounded as being defined, in part, by an arc generated by movement of a radius $r_2$ about an axis, which radius $r_2$ is less than radius $r_1$, the movement of which defines the protrusions. As illustrated in the figure, each of radius $r_2$ is generated about its axis, wherein the axes lie on a line separated by a distance $\beta$.

It will be understood that provision of channels having a size preventing entry of protrusions, having a size $\alpha$, of adjacent catalyst shapes will permit the hydrocarbon or other charge to enter each of such channels. The particles will thus be prevented from "packing" in a bed and the overall bulk density of the bed will be low.

In a preferred embodiment of the invention, adjacent to each of the aforementioned channels will be channels comprising a portion of an arc defined by movement of a radius $r_3$ about an axis, wherein the radius $r_3$ is greater than the radius $r_2$ defining the aforementioned channels up to and including a radius $r_3$ equal to the radius $r_1$ of the bulbous protrusions. A channel defined by the arc will not permit entry of a bulbous protrusion of an adjacent particle, since the arc is generally less than 180°. This arc, together with the adjacent protrusions, define the channel which will not interdigitate with adjacent catalyst protrusions, and hence will remain open to the charge during packing in a bed.

In a further preferred embodiment of the invention, the smaller 20, 22 and larger channels 24, 26 alternate between adjacent protrusions.

It will be understood that for specific applications, the dimensions of the particle can be varied. Typical dimensions for the catalyst particle are as follows:

$r_1$ = 0.51 mm (0.0200) inches
$r_2$ = 0.34 mm (0.0133) inches
X = 1.69 mm (0.0667) inches
Y = 1.69 mm (0.0667) inches

3

Z = 2.71 mm (0.1067) inches
α = 1.02 mm (0.0400) inches
β = 1.35 mm (0.0533) inches
$r_2 < r_3 < r_1$

The catalyst particle configurations of the present invention are usefully employed in catalyst structures for heterogeneous reactions, for example, support materials such as the difficultly reducible oxides of Groups II to IV of the Periodic Table which are difficult to reduce, including hydraulic cements, oxides such as silica, alumina and oxides from Groups VI to VIII of the Periodic Table, and metals from Groups IB and VIII of the Periodic Table. Catalysts are contemplated in the scope of the present invention which contain no added metal, as well as catalysts which contain added metal, metals such as, for example, nickel, platinum, palladium, silver, copper and the like. The catalyst particles of the present invention may comprise alumina, silica, silica alumina, zirconia, titania, or any of these as a support in admixture with a zeolite. Useful catalysts also include those containing cobalt and molybdenum oxides and copper and zinc oxides. The constituents may be all present at the time of shaping or may be added afterwards, for example, by impregnation or by ion-exchange.

As hereinbefore indicated, a wide variety of catalytic compositions may be employed utilizing the novel particle structures in accordance with the present invention, including catalysts which comprise crystalline aluminosilicate zeolites. Such zeolites may have contained within their internal crystalline structure other materials, such as, for example, amorphous silica, $Fe_2O_3$, $B_2O_3$, $P_2O_5$, and the like.

Also intending to be within the scope of the present invention are zeolites, such as zeolites X and Y; Zeolite Beta, mordenite and erionite.

Zeolites suitable for the present invention are those having a Constraint of Index of 1 to 12. The Constraint Index approximates the ratio of the cracking rate constants for the two hydrocarbons. The "Constraint Index" is calculated as follows:

$$\text{Constraint Index} = \frac{\log_{10} \text{ (fraction of hexane remaining)}}{\log_{10} \text{ (fraction of 3-methylpentane remaining)}}$$

Constraint Index (CI) values for some typical materials are:

| | CI |
|---|---|
| ZSM-4 | 0.5 |
| ZSM-5 | 8.3 |
| ZSM-11 | 8.7 |
| ZSM-12 | 2 |
| ZSM-12 | 9.1 |
| ZSM-35 | 4.5 |
| ZSM-38 | 2 |
| ZSM-48 | 3.4 |
| TMA Offretite | 3.7 |
| Clinoptilolite | 3.4 |
| Zeolite Beta | 0.6 |
| H-Zeolon (Mordenite) | 0.4 |
| REY | 0.4 |
| Amorphous Silica-Alumina | 0.6 |
| Erionite | 38 |

The above-described Constraint Index is an important and even critical definition of those zeolites which are useful in the instant invention. The very nature of this parameter and the recited technique by which it is determined, however, admit of the possibility that a given zeolite can be tested under somewhat different conditions, and thereby exhibit different Constraint Indices. Constraint Index seems to vary somewhat with severity of operation (conversion) and the presence or absence of binders. Likewise, other variables, such as crystal size of the zeolite, the presence of occluded contaminants, etc., may affect the Constraint Index. Therefore, it will be appreciated that it may be possible to so select test conditions as to establish more than one value in the range of 1 to 12 for the Constraint Index of a particular zeolite. Such a zeolite exhibits the constrained access, as herein defined, and is to be regarded as having a Constraint Index in the range of 1 to 12. Also contemplated herein as having a Constraint Index in the range of 1 to 12, and therefore within the scope of the defined novel class of highly siliceous zeolites, are those zeolites which, when tested under two or more sets of conditions within the above-specified ranges of temperature and conversion, produce a value of the Constraint Index slightly less than 1, e.g., 0.9, or somewhat greater than 12, e.g., 14 or 15, with at least one other value within the range of 1 to 12. Thus, it should be understood that the Constraint Index value, as used herein, is an inclusive rather than an exclusive value. That is, a crystalline zeolite, when identified by any combination of conditions within the testing definition set forth herein as having a Constraint Index in the range of 1 to 12, is intended to be included in the instant novel zeolite definition whether or not the same identical zeolite, when tested under other of the defined conditions, may give a Constraint Index value outside of the range of 1 to 12.

The zeolites defined herein are exemplified by ZSM-5, ZSM-11, ZSM-12, ZSM-23, ZSM-35, ZSM-38, ZSM-48 and other similar materials. ZSM-5 is the preferred crystalline zeolite.

ZSM-5 is described in greater detail in U. S. Patent Nos. 3,702,886 and Re. 29,948.
ZSM-11 is discussed in U. S. Patent No. 3,709,979.

ZSM-12 is described in U. S. Patent No. 3,832,449.
ZSM-23 is described in U. S. Patent No. 4,076,842.
ZSM-35 is described in U. S. Patent No. 4,016,245.
ZSM-38 is more particularly described in U. S. Patent No. 4,046,859.

ZSM-48 can be identified, in terms of moles of anhydrous oxides per 100 moles of silica, as follows:

$(0-15)RN : (0-1.5)M_{2/n}O : (0.2)Al_2O_3 : (100)SiO_2$

wherein:

M is at least one cation having a valence n; and RN is a $C_1-C_{20}$ organic compound having at least one amine functional group of $pK_a < 7$.

The identification of the crystalline zeolites can be resolved on the basis of their respective X-ray diffraction patterns, as described in the foregoing patents. The present invention contemplates utilization of such catalysts, wherein the mole ratio of silica-to-alumina is essentially unbounded. The incorporation of the identified patents should, therefore, not be construed as limiting the disclosed crystalline zeolites to those having the specific silica-alumina mole ratios discussed therein, it now being known that such zeolites may be substantially aluminum-free and yet have the same crystal structure as the disclosed materials and may be useful or even preferred in some applications. It is the crystal structure, as identified by the X-ray diffraction "fingerprint", which establishes the identify of the specific crystalline zeolite material.

The specific zeolites described, when prepared in the presence of organic ratios, are substantially catalytically inactive, possibly because the intra-crystalline free space is occupied by organic cations from the forming solution. They may be activated by heating in an inert atmosphere at 540°C for 1 hour, for example, followed by base-exchange with ammonium salts followed by calcination at 540°C in air. The presence of organic cations in the forming solution may not be absolutely essential to the formation of this type zeolite, however, the presence of these cations does appear to favor the formation of this special class of zeolite. More generally, it is desirable to activate this type catalyst by base-exchange with ammonium salts followed by calcination in air at about 540°C for from about 15 minutes to about 24 hours.

Natural zeolites may sometimes be converted to zeolite structures of the class herein identified by various activation procedures and other treatments, such as base-exchange, steaming, alumina extraction and calcination, alone or in combination. Natural minerals which may be so treated include ferrierite, brewsterite, stilite, dachiardite, epistilbite, heulandite and clinoptilolite.

In a preferred aspect of this invention, the zeolites hereof are selected by those providing, among other things, a crystal framework density, in the dry hydrogen form, of not less than about 1.6 grams per cubic centimeter. It has been found that zeolites which satisfy all three of the discussed criteria are most desired for several reasons. When hydrocarbon products or by-products are catalytically formed, for example, such zeolites tend to maximize the production of gasoline boiling range hydrocarbon products. Therefore, the preferred zeolites useful with respect to this invention are those having a Constraint Index as defined above of about 1 to about 12, a silica-to alumina mole ratio of at least about 12, and a dried crystal density of not less than about 1.6 grams per cubic centimeter. The dry density for known structures may be calculated from the number of silicon plus aluminum atoms per 1000 cubic Angstroms, as given, e.g., on page 19 of the article "Zeolite Structure" by W. M Meier. This paper is included in Proceedings of the Conference on Molecular Sieves (London, April 1967), published by the Society of Chemical Industry, London, 1968.

When the crystal structure is unknown, the crystal framework density may be determined by classical pycnometer techniques. For example, it may be determined by immersing the dry hydrogen form of the zeolite in an organic solvent which is not sorbed by the crystal. Or, the crystal density may be determined by mercury porosimetry, since mercury will fill the interstices between crystals, but will not penetrate the intracrystalline free space.

It is possible that the unusual sustained activity and stability of this special class of zeolites is associated with its high crystal anionic framework density of not less than about 1.6 grams per cubic centimeter. This high density must necessarily be associated with a relatively small amount of free space within the crystal, which might be expected to result in more stable structures. This free space, however, is important as the locus of catalytic activity.

Crystal framework densities of some typical zeolites, including some which are not within the purview of this invention, are:

|  | Void Volume | Framework Density |
| --- | --- | --- |
| Ferrierite | 0.28 cc/cc | 1.76 g/cc |
| Mordenite | .28 | 1.7 |
| ZSM-5, -11 | .29 | 1.79 |
| ZSM-12 | - | 1.8 |
| ZSM-23 | - | 2.0 |
| Dachiardite | .32 | 1.72 |
| L | .32 | 1.61 |
| Clinoptilolite | .34 | 1.71 |
| Laumontite | .34 | 1.77 |
| ZSM-4 (Omega) | .38 | 1.65 |
| Heulandite | .39 | 1.69 |
| P | .41 | 1.57 |
| Offretite | .40 | 1.55 |
| Levynite | .40 | 1.54 |
| Erionite | .35 | 1.51 |
| Gmelinite | .44 | 1.46 |
| Chabazite | .47 | 1.45 |
| A | .5 | 1.3 |
| Y | .48 | 1.27 |

When synthesized in the alkali metal form, the zeolite is conveniently converted to the hydrogen form, generally by intermediate formation of the ammonium form, as a result of ammonium ion-exchange and calcination of the ammonium form to yield the hydrogen form. In addition to the hydrogen form, other forms of the zeolite where the original alkali metal has been reduced to less than about 1.5 wt % may be used. Thus, the original alkali metal of the zeolite may be replaced by ion-exchange with other suitable metal cations of Groups I to VIII of the Periodic Table, including, by way of example, nickel, copper, zinc, palladium, calcium or rare earth metals.

In practicing a particularly desired chemical conversion process, it may be useful to incorporate the above described crystalline zeolite with a matrix comprising another material resistant to the temperature and other conditions employed in the process. Such matrix material is useful as a binder and imparts greater resistance to the catalyst for the severe temperature, pressure and reactant feed stream velocity conditions encountered in many cracking processes.

Useful matrix materials include both synthetic and naturally occurring substances, as well as inorganic materials, such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolines commonly known as Dixie, McNamee-Georgia and Florida clays, or others in which the main mineral constituent is halloysite, kaolinite, dickite, nacrite or anauxide. Such clays can be used in the raw state, as originally mined, or initially subjected to calcination, acid treatment or chemical modification.

In addition to the foregoing materials, the zeolites employed herein may be composited with a porous matrix (or binder) material, such as alumina, silica-alumina, silica-magnesia, silica zirconia, silica-thoria, silica-beryllia and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely, with the zeolite content ranging from between about 1 to about 99 wt %, and more usually in the range of about 5 to about 80 wt % of the dry composite.

7

In summary, the novel shaped particles of the present invention comprise an H- or I-shaped structure having bulbous protrusions and rounded channels, each defined by generation of arcs by movement of a radius about an axis. Typical dimensions for $r_1$ would be 0.5 mm (0.0200 inches), and for $r_2$ equaling 3.4 mm (0.0133 inches). A typical distance between the axes of adjacent bulbous protrusions would be 1.7 mm (0.0667 inches) and, in a particularly preferred embodiment of the invention. each of the axes about which the radius $r_1$ rotates would lie on the point of a square having a width and height equaling 1.7 mm (0.0667 inches). The resulting catalyst particles could lie within a square having sides of 2.7 mm (0.1067 inches) and be circumscribed by a cylinder, with the catalyst particles having four points of contact with said cylinder.

Catalysts of this size have better overall physical properties regarding diffusion limitation, pressure drop and crushing strength than those typical cylindrical shapes having sizes of 1 to 1.6 mm (1/25 and 1/16"). Of course, for specific applications, the dimensions can be varied. As a non-limiting example, the foregoing dimensions of the particle where chosen so that the diffusion paths across the solid section is close to 1 mm (1/25"), but the nominal outside diameter is 3.2 mm(1/8"). The former dimension has found particular use for ZSM-5 catalysts in order to minimize the durene concentration in methanol-to-gas conversion processes, as well as to optimize the activity and selectivity of ethyl benzene processes. Pressure drop in a packed bed would be minimized. Typical lengths of the particles would be equal to or greater than the cross-sectional dimensions of the particles.

EXAMPLES

Example 1

All the following catalysts have the same composition of 65% Na/ZSM-5 and 35% alumina. The volume-to-surface ratio of a catalyst particle, $V_p/S_p$, is related to the effectiveness factor, which has a value between 0 and 1 under normal conditions. Smaller $V_p/S_p$ means effectiveness factor. A reaction is not diffusion limited when the effectiveness factor equals one. In the following Table 1, the data indicates that the asymmetric quadrulobe shape of the invention has smaller pressure drop, small $V_p/S_p$ and reasonably high crushing strength which varies depending on how the load is applied to the asymmetric extrudate. The quadrulobe-shape has very good crushing strength. but it has greater $V_p/S_p$ as well as higher pressure drop. In each case, the asymmetric quadrulobe shape of the invention exhibited better properties than cylindrical catalysts having nominal outside diameters of 1 and 1.6 mm (1/25 and 1/16"), respectively.

8

TABLE 1

Physical Properties of Shaped Extrudates* (NaZSM-5B Catalysts)

| Catalyst Shape | Asymmetric Quadrulobe | | Quadrulobe | Cylinder | Cylinder |
|---|---|---|---|---|---|
| Maximum Outside Diameter, mm (in) | 3.4 (0.1343) | | 2.4 (0.0938) | 1.0 (0.0400) | 1.6 (0.0625) |
| Cross-Sectional Area, $mm^2$ ($in^2$) | 4.8 (0.00750) | | 2.8 (0.00438) | 0.8 (0.0012) | 2.8 (0.0043) |
| Average Length, mm (in) | 5.7 (0.2247) | | 4.8 (0.1879) | 3.1 (0.1235) | 3.6 (0.140) |
| $V_p/S_p$, mm (in) | 0.30 (0.01181) | | 0.33 (0.01315) | 0.21 (0.0085) | 0.37 (0.0146) |
| Pressure Drop, mm $H_2O$/Cm (inch) $H_2O$/ft ($N_2$ mass flow rate) | | | | | |
| 4882 kg/$m^2$ hr (1000 lb/$ft^2$ hr) | 6.7 (8) | | 14.2 (17) | 35.8 (43) | 25.8 (31) |
| 9764 kg/$m^2$ hr (2000 lb/$ft^2$ hr) | 20.8 (25) | | 38.3 (46) | 100.8 (121) | 74.2 (89) |
| Crushing Strength, kg/cm (lbs/in) | Up-right | Side-**Way | | | |
| Average | 16.6 (92.7) | 7.3 (40.9) | 27.3 (153.0) | 5.0 (27.7) | 6.0 (33.6) |
| Range | 12.243 (67-136) | 3.6-12 (20-68) | 19-36 (107-200) | 1.8-7.1 (10-40) | 2.3-10.7 (13-60) |
| Particle Density, g/cc | 0.848 | | 0.839 | 0.808 | 0.794 |

\*    Prepared by a hydraulic press, or ram extruder

\*\*    In the accompanying figure "sideway" is viewed from the right-hand margin normal to the particle

## Claims

1. A shaped particle comprising four protrusions each extending from and attached to a central position, the particle having an asymmetric cross-sectional shape, the protrusions having an external periphery with four points of contact when circumscribed by a circle, each pair of protrusions being separated by a channel which is narrower than the protrusions to prevent the entry thereinto by the protrusions of an adjacent particle.

2. The particle of claim 1 wherein the protrusions are bulbous.

3. The particle of claim 2 wherein the channels comprise an arc having a radius smaller than that of the bulbous protrusions.

4. The particle of claim 3 wherein one pair of the diametorically opposed channels comprise an arc having a radius different from that of the other pair.

5. The particle of claim 1, 2, 3 or 4 wherein the asymmetric configuration is H- or I-shaped.

6. The particle of any one of the preceding claims wherein the particle is formed of alumina, silica, aluminosilicates, and mixtures thereof.

7. The particle of any one of the preceding claims wherein the particle comprises a zeolite.

8. The particle of any one of the preceding claims wherein the particle comprises a zeolite and a binder.

9. The particle of claim 8 wherein the zeolite comprises 1 to 99% by weight.

10. A process for the conversion of an organic charge comprising contacting the charge with a catalyst comprising the particles of any one of claims 1-9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-3 674 680  (GERALD B.HOEKSTRA) <br> * Figure 2b; column 2, lines 43-57 * | 1-10 | B 01 J  35/02 <br> B 01 J  29/06 |
| Y | DE-A-3 315 105  (VEB LEUNA WERKE "WALTER ULBRICHT") <br> * Figures; claims 1,6 * | 1-6,10 | |
| D,Y | US-A-4 441 990  (YUN-YANG HUANG) <br> * Claims 1,9-15,17 * | 7-9 | |
|  | ----- | | |

|  | | | TECHNICAL FIELDS SEARCHED (Int. Cl.4) |
|---|---|---|---|
|  | | | B 01 J |

The present search report has been drawn up for all claims

| Place of search | Date of completion of the search | Examiner |
|---|---|---|
| THE HAGUE | 17-12-1986 | THION M.A. |